Europäisches Patentamt

European Patent Office

Office européen des brevets

(11) Publication number: **0 501 451 A2**

# EUROPEAN PATENT APPLICATION

(21) Application number: **92103266.0**

(22) Date of filing: **26.02.92**

(51) Int. Cl.5: **H04M 9/08**, H04B 3/23

(30) Priority: **27.02.91 JP 56096/91**

(43) Date of publication of application:
**02.09.92 Bulletin 92/36**

(84) Designated Contracting States:
**DE GB IT SE**

(71) Applicant: **NEC CORPORATION**
**7-1, Shiba 5-chome Minato-ku**
**Tokyo 108-01(JP)**

(72) Inventor: **Sano, Hideo, c/o NEC Corporation**
**7-1, Shiba 5-chome**
**Minato-ku, Tokyo(JP)**

(74) Representative: **Vossius & Partner**
**Siebertstrasse 4 P.O. Box 86 07 67**
**W-8000 München 86(DE)**

(54) Method and arrangement for generating tap-coefficients updating inhibit signal in speakerphone.

(57) In order to avoid a false detection of double talk in a speakerphone arrangement located in an environment wherein background noises are present, the signal from a microphone is high pass filtered to eliminate the effects of the noises. The signal power of the filtered signal and the attenuated form of the signal supplied to the speaker are compared to determine if tap-coefficient updating inhibition is required or not.

**FIG. 3**

EP 0 501 451 A2

The present invention relates generally to a method and arrangement for generating a tap-coefficients updating inhibit signal in a long distance telephone communications system, and more specifically to such an arrangement and method which finds useful application in detecting double talk (for example) in a vehicle mounted speakerphone which is subject to environmental/background noises caused by engine idling, high speed travelling, etc.

Long distance telephone communications system have been constantly plagued by the so called "echo" phenomenon. A known approach to solving this problem is the use of an echo canceller or echo suppressor. This arrangement includes an echo estimator which takes the form of a digital transversal filter.

However, when both parties talk simultaneously, i.e., during double talk, the echo canceller is no longer able to effectively update tap-coefficients of the transversal filter. This is because the near-end party's signals mask the echo and allow the same to be included in the signal to be transmitted. Accordingly, it is a current practice to provide a double talk detector to inhibit the updating of tap-coefficients of the filter upon detecting the double talk. Similarly, in the case where the power of an incoming signal is relatively small, the aforesaid tap-coefficient updating is not effectively implemented and hence such an operation based on the small incoming signal (usually noises) should be inhibited.

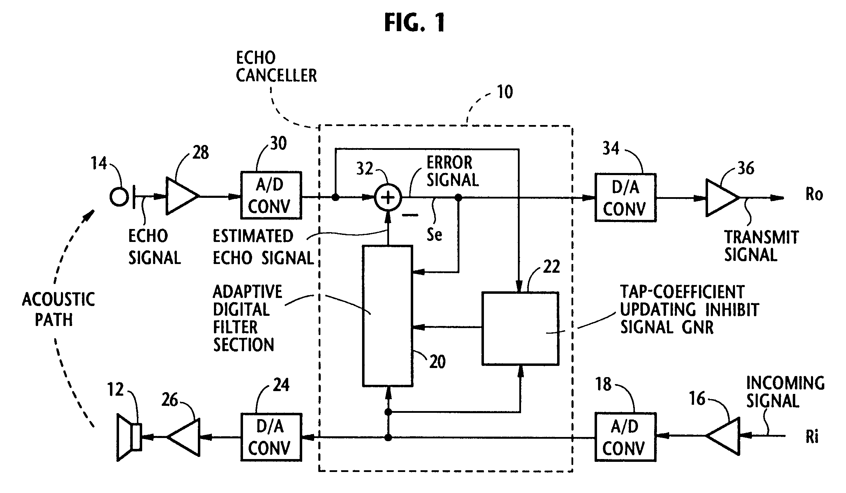

Before turning to the instant invention it is deemed advantageous to discuss a known echo canceller, which includes a tap-coefficient updating inhibit signal generator, with reference to Fig. 1.

The Fig. 1 arrangement is generally comprised of the echo canceller 10, a speaker 12, a microphone 14, etc.

In Fig. 1, an incoming signal Ri is applied to an analog-to-digital (A/D) converter 18 after being limited in terms of the amplitude thereof to a predetermined range at an amplifier 16. The digital output of the A/D converter 18 is fed to an adaptive digital filter (ADF) section 20 and a tap coefficient updating inhibit signal generator 22 both of which form part of an echo canceller 10, and also to an a digital/analog (D/A) converter 24. The analog output of the D/A converter 24 is amplified at an output amplifier 26 and then energises the speaker 12.

The output of the microphone 14 is applied, via an amplifier 28 and an A/D converter 30, to an adder 32 which forms part of the echo canceller 10. The adder 32 subtracts an estimated echo signal (viz., output of the ADF section) from the output of the A/D converter 30 (viz., output of the microphone 14).

As is well known in the art, the echo canceller 10 updates tap-coefficients of an adaptive digital filter (not shown) using the following algorithms. In other words, the echo canceller 10 is provided to render an error signal Se zero when only the echo is applied to the microphone 14 via an acoustic path (viz., during a socalled single talk).

$$H_n + 1 = H_n + \alpha^*(Xn/XnXn^T)^*Se_n$$

Where $H_n$ is a row vector of tap-coefficient matrix at a time "n", Xn a row vector of a matrix of the digitized incoming signal Ri at a time n, $Se_n$ an error signal at a time n, $\alpha$ a convergence coefficient ($0<\alpha<2$), T indicating transposition of vector, and * indicating a convolution.

The aforesaid tap-coefficients updating is well known in the art and is not directly concerned with the present invention and, accordingly further descriptions thereof will be omitted for simplifying the instant disclosure.

In the case where the tap-coefficients updating is correctly implemented, only a near-end party's speech signal is derived from the adder 32 during double talk and then converted into the corresponding analog signal at a D/A converter 34. The output of the D/A converter 34 is amplified at an amplifier 36 and sent to the next stage (not shown) as a transmit signal Ro.

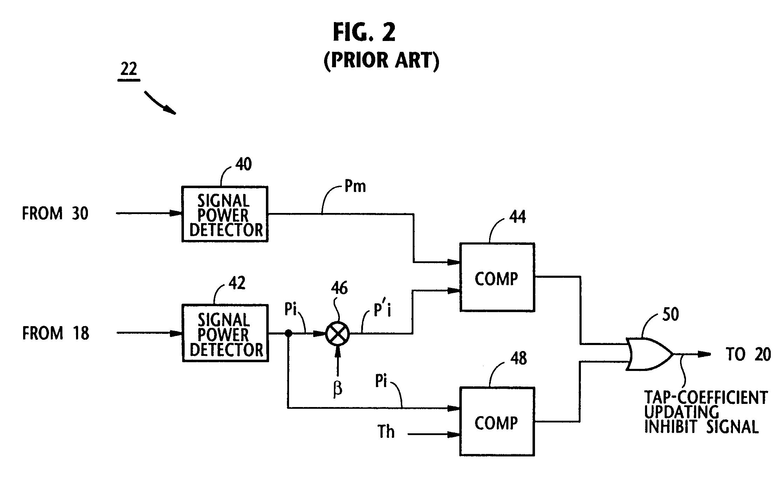

Referring now to Fig. 2, wherein the tap-coefficients updating inhibit signal generator 22 according to a known technique is shown in detail in block diagram form.

As shown in Fig. 2, two signal power detectors 40, 42 are provided and are arranged to receive the outputs of the A/D converters 30, 18 respectively. The detector 40 determines the signal power which corresponds to the acoustic input to the microphone 14, while the detector 42 ascertains the signal power corresponding to the incoming signal Ri. The signal power detector 40 directly applies the output thereof (denoted by Pm) to a comparator 44, while the other signal power detector 42 applies the output thereof (Pi) to a multiplier 46 and is multiplied thereat by a compensation coefficient $\beta$. The output of the multiplier 46 is denoted by P'i. The coefficient $\beta$ is arranged to compensate the amount of attenuation of the signal power of the incoming signal Ri over the acoustic path between the speaker 12 and the microphone 14. That is, the compensation coefficient $\beta$ is determined such that the power level Pm exceeds P'i during double talk and is less than P'i in the event that only the echo is inputted to the microphone 14. The output of the multiplier 46 (P'i) is used as a threshold level at the comparator 44.

In the event that the power level Pm exceeds P'i, the comparator 44 issues a logic 1 and, accordingly an OR gate 50 outputs a tap-coefficient updating inhibit signal which assumes a logic 1. The adaptive digital filter section 20 responds to this signal (logic 1) and terminates the updating operations thereof. On the other hand, if Pm does not reach P'i, the OR gate 50 issues a logic 0 wherein it is assumed that the output of the comparator 48 also takes a logic. Thus, the tapcoefficient updating at the section 20 is not inhibited in the last case.

In the event that the output of the signal power detector 42 (viz., Pi) does not reach a threshold value Th, the comparator 48 issues a logic 1. Thus, the tap-coefficient updating at the digital filter section 20 is terminated by applying a logic 1 from the OR gate 50 to the filter section 20. However, if Pi exceeds Th, the comparator 48 applies a logic 0 to the OR gate 50 allowing the filter section 20 to continue the tap-coefficient updating. The reason why the comparator 48 is provided, is that the tap-coefficient updating is not correctly carried out if the power of the incoming signal Ri is relatively small (usually noises).

The above-mentioned prior art, however, has encountered the drawback when it is applied to a vehicle mounted speakerphone. That is, the microphone 14 picks up environmental/background noises caused by high speed vehicle travelling, engine idling, etc. In more specific terms, such noises undesirably raises the output of the signal power detector 40 (Pm) to a level indicative of double talk, and hence the comparator 44 outputs a logic 1 even when no near-end party's voice is inputted to the microphone 14. If this undesirable situation continues, the tap-coefficient updating is no longer implemented and, in the worst case, so-called "howling" occurs.

It is an object of the present invention to provide a method by which the above-mentioned false detection of double talk can be avoided in a speakerphone which is used in an environment such as an automotive vehicle or the like wherein background noise of the above described nature is apt to be encountered.

Another object of the present invention is to provide an arrangement by which the above-mentioned false detection of double talk can be avoided in a vehicle mounted speakerphone which is used in an environment such as an automotive vehicle or the like wherein background noise of the above described nature is apt to be encountered.

In brief, the above objects are achieved by an arrangement wherein in order to avoid a false detection of double talk in a speakerphone arrangement located in an environment wherein background noises are present, the signal from a microphone is high pass filtered to eliminate the effects of the noises. The signal power of the filtered signal and the attenuated form of the signal supplied to the speaker are compared to determine if tap-coefficient updating inhibition is required or not.

One aspect of the present invention comes in a method of a method of generating a signal for use in update inhibiting of tap-coefficients of an adaptive digital filter in response to double talk detection in a speakerphone which includes a speaker and a microphone, the method comprising the steps of: (a) acquiring a signal outputted from the microphone; (b) passing frequencies above a predetermined frequency of the signal acquired at step (a); (c) detecting power of the signal above the predetermined frequency; (d) acquiring a signal transmitted to the speakerphone; (e) detecting power of the signal transmitted to the speakerphone; (f) attenuating power of the signal transmitted to the speakerphone by a predetermined ratio; and (e) comparing the signal powers obtained at steps (c) and (f), and issuing the signal for use in update inhibiting of the tap-coefficients when the signal power obtained at step (c) is larger than the signal power obtained at step (f)

Second aspect of the present invention comes in a method of generating a signal for use in update inhibiting of tap-coefficients of an adaptive digital filter in response to double talk detection in a speakerphone which includes speaker means and a microphone means, the method comprising the steps of: high pass filtering a signal produced by the microphone means; determining the power of the high pass filtered signal and producing a first power indicative signal; determining the power of a signal supplied to the speaker means and producing a second power indicative signal; attenuating the second power indicative signal and producing a third power indicative signal; comparing the first and third power indicative signals; and inhibiting the tap-coefficient update based on the comparison of the first and third power indicative signals.

Third aspect of the present invention comes in an arrangement of generating a signal for use in update inhibiting of tap-coefficients of an adaptive digital filter in response to double talk detection in a speakerphone which includes a speaker and a microphone, the arrangement comprising: first means for passing frequencies above a predetermined frequency of a signal outputted from the microphone; second means coupled to the first means, the second means detecting the power of the signal above the predetermined frequency; third means coupled to said second means, the third means detecting the power of a signal transmitted to the speakerphone; fourth means coupled to the third means, the fourth means attenuating the power of the signal transmitted to the speakerphone by a predetermined ratio; fifth means for comparing the signal powers obtained at second and fourth means, said fifth means issuing the signal for use in update inhibiting of the tap-coefficients when the signal power obtained at the second means is greater than the signal power obtained at the fourth means.

Fourth aspect of the present invention comes in an arrangement for generating a signal for use in update inhibiting of tap-coefficients of an adaptive digital filter in response to double talk detection in a speakerphone which includes speaker means and a microphone means, comprising: means for high pass filtering a signal produced by the microphone means; means for determining the power of the high pass filtered signal and producing a first power indicative signal; means for determining the power of a signal supplied to the speaker means and producing a second power indicative signal; means for attenuating the second power indicative signal and producing a third power indicative signal; means for comparing the first and third power indicative signals; and means for inhibiting the tap-coefficient update based on the comparison of the first and third power indicative signals.

The features and advantages of the present invention will become more clearly appreciated from the following description taken in conjunction with the accompanying drawings in which like elements are denoted by like reference numerals and in which:

Fig. 1 is a block diagram schematically showing an arrangement of a speakerphone which includes an echo canceller of the nature to which the present invention is applicable, this figure having been referred to in the opening paragraphs of the instant disclosure;

Fig. 2 is a block diagram showing a known tap-coefficient updating inhibit arrangement discussed in the opening paragraphs of the instant disclosure;

Fig. 3 is a block diagram showing an embodiment of a tap-coefficient updating inhibit arrangement according to the present invention;

Fig. 4 is a block diagram showing a variant of the embodiment of Fig. 3; and

Fig. 5 is a graph showing examples of voltages vs. frequency characteristics of the incoming signal Ri and noises caused by vehicle high speed travelling and engine idling.

## DETAILED DESCRIPTION OF THE PREFERRED EMBODIMENTS

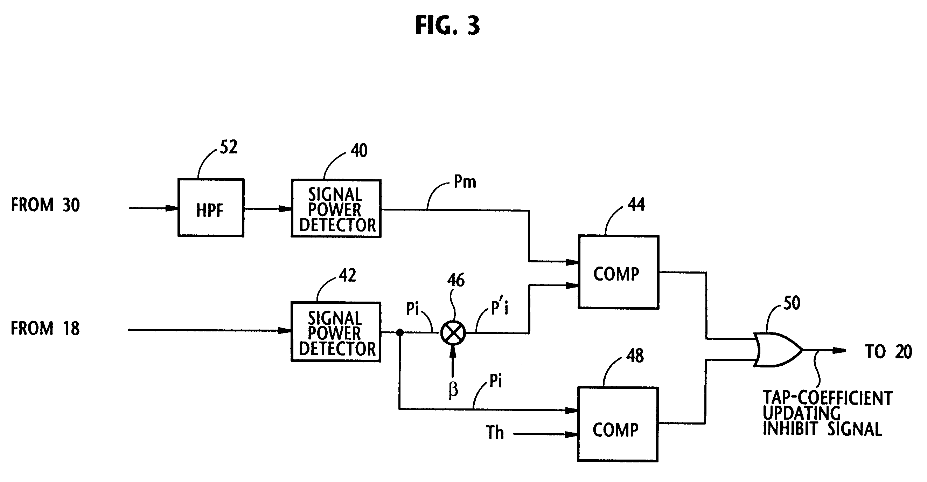

Fig. 3 is a block diagram showing an embodiment of the present invention wherein a high-pass filter 52 is provided in addition to the Fig. 2 arrangement. The remaining portions of Fig. 3 are essentially identical with those of Fig. 2 and hence further descriptions thereof will be omitted for the sake of brevity.

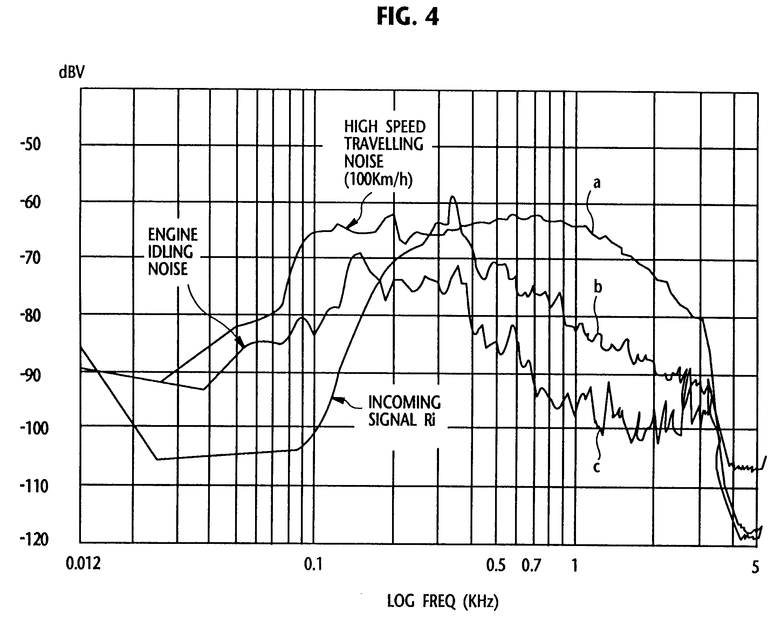

Reference is made to Fig. 4, wherein three voltage with respect to frequency curves are illustrated. Curve (a) shows the voltage vs. frequency characteristics of the incoming signal Ri measured at the output of the A/D converter 18 (Fig. 1). Curve (b) shows voltage vs. frequency characteristics of vehicle travelling at 100 Km/h, while curve (c) demonstrates the voltage vs. frequency characteristics which result from vehicle engine idling noises. The noise level depicted by each of the curves (b), (c) is measured at the output of the A/D converter 30.

As will be understood from Fig. 4, each of the noises depicted by the curves (b), (c) exhibits values which are relatively high up to the 500-700Hz range as compared with the incoming signal Ri. These low frequency vehicle noises invite the above-mentioned false detection of double talk. In order to effectively attenuate this low frequency noises, the Fig. 3 embodiment is provided with the high-pass filter 52 by which the drawback inherent in the Fig. 2 arrangement is overcome. The cutoff frequency of the high-pass filter 52 is preferably set to a frequency within a range of 500-700Hz by way of example.

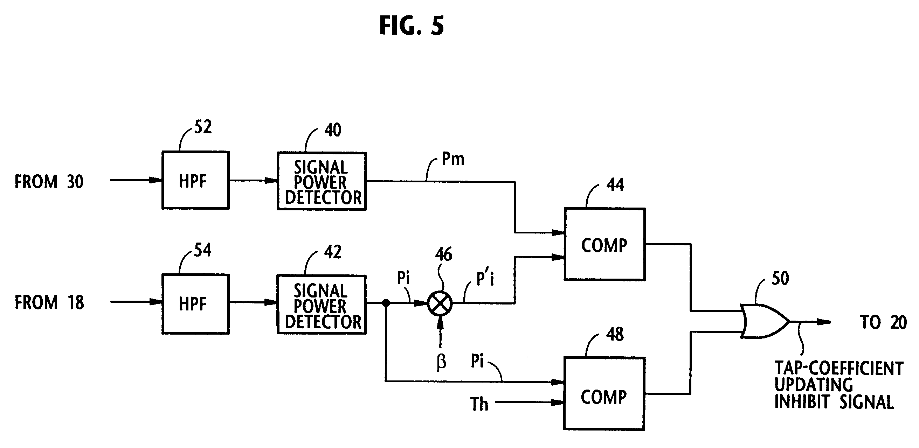

Fig. 5 is a modification of the Fig. 3 arrangement which further includes another high-pass filter 54 whose characteristics are essentially identical with those of the filter 52. The purpose of the provision of the high-pass filter 54, in addition to the filter 52, is to obtain the outputs of the signal power detectors 40, 42 within the same frequency range in order to increase accuracy of the comparison result at the comparator 44.

While the foregoing description describes an embodiment of present invention and the variant thereof, the various alternatives and modifications possible without departing from the scope of the present invention, which is limited only by the appended claims, will be apparent to those skilled in the art.

## Claims

1. A method of generating a signal for use in update inhibiting of tap-coefficients of an adaptive digital filter in response to double talk detection in a speakerphone which includes a speaker and a microphone, the method comprising the steps of:

    (a) acquiring a signal outputted from the microphone;

    (b) passing frequencies above a predetermined frequency of the signal acquired at step (a);

    (c) detecting power of the signal above the predetermined frequency;

    (d) acquiring a signal transmitted to the speakerphone;

(e) detecting power of the signal transmitted to the speakerphone;

(f) attenuating power of the signal transmitted to the speakerphone by a predetermined ratio; and

(e) comparing the signal powers obtained at steps (c) and (f), and issuing the signal for use in update inhibiting of the tap-coefficients when the signal power obtained at step (c) is larger than the signal power obtained at step (f).

2. A method as claimed in claim 1, further comprising the following step between steps (d) and (e):

passing a predetermined high frequency range of the signal received at step (d).

3. A method of generating a signal for use in update inhibiting of tap-coefficients of an adaptive digital filter in response to double talk detection in a speakerphone which includes speaker means and a microphone means, the method comprising the steps of:

high pass filtering a signal produced by the microphone means;

determining the power of the high pass filtered signal and producing a first power indicative signal;

determining the power of a signal supplied to the speaker means and producing a second power indicative signal;

attenuating the second power indicative signal and producing a third power indicative signal;

comparing the first and third power indicative signals; and

inhibiting the tap-coefficient update based on the comparison of the first and third power indicative signals.

4. A method as set claimed in claim 3 further comprising the step of high pass filtering the signal supplied to the speaker means before determining the power thereof.

5. An arrangement of generating a signal for use in update inhibiting of tap-coefficients of an adaptive digital filter in response to double talk detection in a speakerphone which includes a speaker and a microphone, the arrangement comprising:

first means for passing frequencies above a predetermined frequency of a signal outputted from the microphone;

second means coupled to the first means, the second means detecting the power of the signal above the predetermined frequency;

third means coupled to said second means, the third means detecting the power of a signal transmitted to the speakerphone;

fourth means coupled to the third means, the fourth means attenuating the power of the signal transmitted to the speakerphone by a predetermined ratio;

fifth means for comparing the signal powers obtained at second and fourth means, said fifth means issuing the signal for use in update inhibiting of the tap-coefficients when the signal power obtained at the second means is greater than the signal power obtained at the fourth means.

6. An arrangement as claimed in claim 5, further comprising:

sixth means preceding the third means, the sixth means passing a predetermined high frequency range of the signal transmitted to the speakerphone.

7. An arrangement for generating a signal for use in update inhibiting of tap-coefficients of an adaptive digital filter in response to double talk detection in a speakerphone which includes speaker means and a microphone means, comprising:

means for high pass filtering a signal produced by the microphone means;

means for determining the power of the high pass filtered signal and producing a first power indicative signal;

means for determining the power of a signal supplied to the speaker means and producing a second power indicative signal;

means for attenuating the second power indicative signal and producing a third power indicative signal;

means for comparing the first and third power indicative signals; and

means for inhibiting the tap-coefficient update based on the comparison of the first and third power indicative signals.

8. An arrangement as claimed in claim 7 further comprising means for high pass filtering the signal supplied to the speaker means before it is supplied to the power determining means.

**FIG. 1**

**FIG. 2**
**(PRIOR ART)**

FROM 30 → 40 SIGNAL POWER DETECTOR → Pm → 44 COMP

FROM 18 → 42 SIGNAL POWER DETECTOR → Pi → 46 ⊗ ← β → P'i → 44 COMP

Pi → 48 COMP ← Th

44 COMP and 48 COMP → 50 → TO 20

TAP-COEFFICIENT
UPDATING
INHIBIT SIGNAL

22

# FIG. 3

EP 0 501 451 A2

FIG. 4

# FIG. 5